(19) Europäisches Patentamt
European Patent Office
Office européen des brevets

(11) **EP 1 183 840 B1**

(12) **EUROPEAN PATENT SPECIFICATION**

(45) Date of publication and mention
of the grant of the patent:
**05.01.2005 Bulletin 2005/01**

(51) Int Cl.⁷: **H04L 25/03**, H04L 27/01

(21) Application number: **01925605.6**

(86) International application number:
**PCT/FI2001/000334**

(22) Date of filing: **05.04.2001**

(87) International publication number:
**WO 2001/078338 (18.10.2001 Gazette 2001/42)**

(54) **OPTIMIZATION OF CHANNEL EQUALIZER**

OPTIMIERUNG VON KANALENTZERRUNG

OPTIMISATION D'EGALISEUR DE CANAL

(84) Designated Contracting States:
**AT BE CH CY DE DK ES FI FR GB GR IE IT LI LU MC NL PT SE TR**

(30) Priority: **06.04.2000 FI 20000820**

(43) Date of publication of application:
**06.03.2002 Bulletin 2002/10**

(73) Proprietor: **Nokia Corporation**
**02150 Espoo (FI)**

(72) Inventor: **PIIRAINEN, Olli**
**FIN-90100 Oulu (FI)**

(74) Representative: **Antila, Harri Jukka Tapani et al**
**Kolster Oy Ab,**
**P.O. Box 148,**
**Iso Roobertinkatu 23**
**00121 Helsinki (FI)**

(56) References cited:
WO-A1-97/08841          US-A- 5 297 168
US-A- 5 327 460          US-A- 5 390 364
US-A- 5 727 032

**Description**

FIELD

The invention relates to estimating noise power in a radio receiver in order to determine channel equalizer parameters.

BACKGROUND

Radio receivers employ different channel equalizers to remove intersymbol interference (ISI), which is caused by linear and non-linear distortions to which a signal is subjected in a radio channel. Intersymbol interference occurs in band-limited channels when the pulse shape used spreads to adjacent pulse intervals. The problem is particularly serious at high transmission rates in data transfer applications. There are many different types of equalizers, such as a DFE (Decision Feedback Equalizer), an ML (Maximum Likelihood) equalizer and an MLSE (Maximum Likelihood Sequence Estimation Equalizer), the two latter ones being based on the Viterbi algorithm.

It is widely known that the information received from equalizers based on the Viterbi algorithm for soft decision making in decoding must be weighted taking noise or interference power into account in order to enable the performance to be optimized. The problem is then how to estimate the noise power in a reliable manner.

Publication US 5,199,047 discloses a method which enables reception quality to be estimated in TDMA (Time Division Multiple Access) systems. In the method, channel equalizers are adjusted by comparing a training sequence stored in advance in the memory with a received training sequence. A training sequence is transmitted in connection with each data transmission. The publication discloses a widely known receiver structure wherein impulse response H(O) of a channel is determined by calculating the cross-correlation of received training sequence X' with sequence X stored in the memory. This impulse response controls a Viterbi equalizer. The publication discloses a method which enables the reception quality to be estimated by calculating estimate S for a received signal

$$S = \sum_0^i s_i = \sum_0^I \left| y_i - x_i' \right|^2, \tag{1}$$

wherein

$y_i$ is the calculated estimate for a signal (including a training sequence) transmitted without interference, and $x_i'$ is the received sample.

The lower estimate S is, the higher the correlation of the estimated training sequence with the received signal sample. Hence, the lower estimate S is, the higher the likelihood that the transmitted data bits can be detected by the channel equalizer used.

The publication also discloses a relative estimate, i.e. quality coefficient Q, which takes the power of the received signal into account

$$Q = \frac{\Sigma \left| X_i' \right|^2}{S} = \frac{\Sigma \left| x_i' \right|^2}{\Sigma \left| y_i - x_i' \right|^2}, \tag{2}$$

wherein quadratic values of training sequence $X_i'$ or individual sample values $x_i'$ are summed in order to determine received signal energy.

A receiver usually, e.g. in a GSM (Global System for Mobile Communications) system modification called EDGE (Enhanced Data Services for GSM Evolution), comprises prefilters before the channel equalizer. Publication US 5,199,047 does not disclose how this fact can be utilized in optimizing the channel equalizer.

BRIEF DESCRIPTION OF THE INVENTION

An object of the invention is thus to provide a method for optimizing a channel equalizer by estimating noise power in two stages, and an apparatus implementing the method. This is achieved by a method for carrying out channel equalization in a radio receiver wherein an impulse response is estimated, noise power is determined by estimating a covariance matrix of the noise contained in a received signal before prefiltering, and tap coefficients of prefilters and an equalizer are calculated. The method comprises determining the noise power after prefiltering by estimating a noise variance, and weighting input signals of the channel equalizer by weighting coefficients obtained by estimating the noise variance.

The invention also relates to a radio receiver comprising means for estimating an impulse response, means for determining noise power of a received signal by estimating a covariance matrix of the noise contained in the received signal before prefiltering, and means for calculating tap coefficients of prefilters and a channel equalizer. The receiver comprises means for determining the noise power after prefiltering by estimating a noise variance, and the receiver comprises means for weighting input signals of the channel equalizer by weighting coefficients obtained from the noise variance estimation.

Preferred embodiments of the invention are disclosed in the dependent claims.

The invention is based on estimating the noise power, i.e. noise variance, of a received signal not only before but also after prefiltering. Weighting coefficients obtained from the estimation are used for weighting an input signal of a channel equalizer.

The method and system of the invention provide several advantages. By weighting the input signal of the channel equalizer, the performance of channel decoding can be improved. This is particularly advantageous if, due to the modulation method of the system, the performance of channel decoding is of considerable importance, such as in a GSM modification called EDGE. In addition, estimating the noise again after prefiltering enables errors occurred in the prefiltering to be taken into account.

## BRIEF DESCRIPTION OF THE DRAWINGS

The invention is now described in closer detail in connection with the preferred embodiments and with reference to the accompanying drawings, in which

Figure 1 illustrates an example of a telecommunication system,
Figure 2 is a flow diagram showing method steps for estimating a noise covariance twice, and potentially unbiasing an estimate,
Figure 3 shows an impulse response of a received signal,
Figure 4 shows a solution for calculating channel equalizer parameters in a receiver.

## DESCRIPTION OF THE EMBODIMENTS

The invention can be applied to all wireless communication system receivers, in network parts, such as base transceiver stations, and in different subscriber terminals as well.

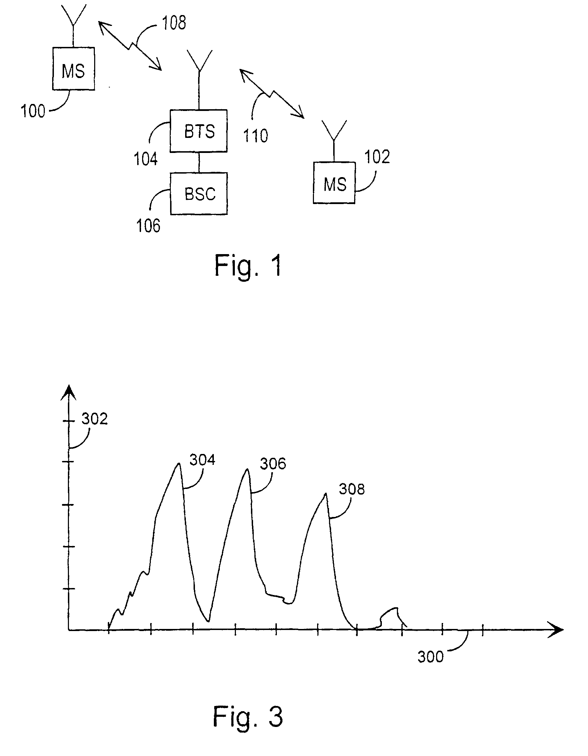

Figure 1 illustrates, in a simplified manner, a digital data transfer system to which the solution of the invention can be applied. The system is part of a cellular radio system comprising a base transceiver station 104 having a radio connection 108 and 110 to subscriber terminals 100 and 102 that can be fixedly positioned, located in a vehicle or portable terminals to be carried around. The transceivers of the base transceiver station are connected to an antenna unit, which is used for implementing a duplex radio connection to a subscriber terminal. The base transceiver station is further connected to a base station controller 106, which conveys the subscriber terminal connections to other parts of the network. In a centralized manner, the base station controller controls several base transceiver stations connected thereto.

The cellular radio system may also be connected to a public switched telephone network, in which case a transcoder converts different digital speech encoding modes used between the public switched telephone network and the cellular radio network into compatible ones, e.g. from the 64 kbit/s mode of the fixed network into another (e.g. 13 kbit/s) mode of the cellular radio network, and vice versa.

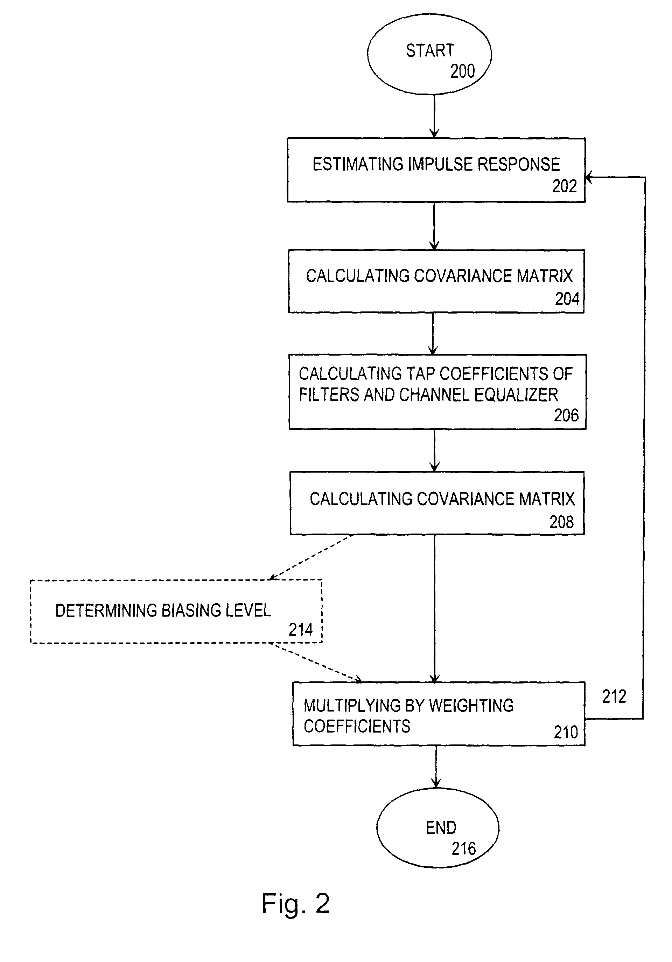

Figure 2 is a flow diagram showing method steps for estimating a noise variance in two stages, and for weighting an input signal of a channel equalizer by weighting coefficients obtained from the noise variance estimation. The individual method steps of the flow diagram will be explained in closer detail in connection with the description of a receiver structure. The process starts from block 200.

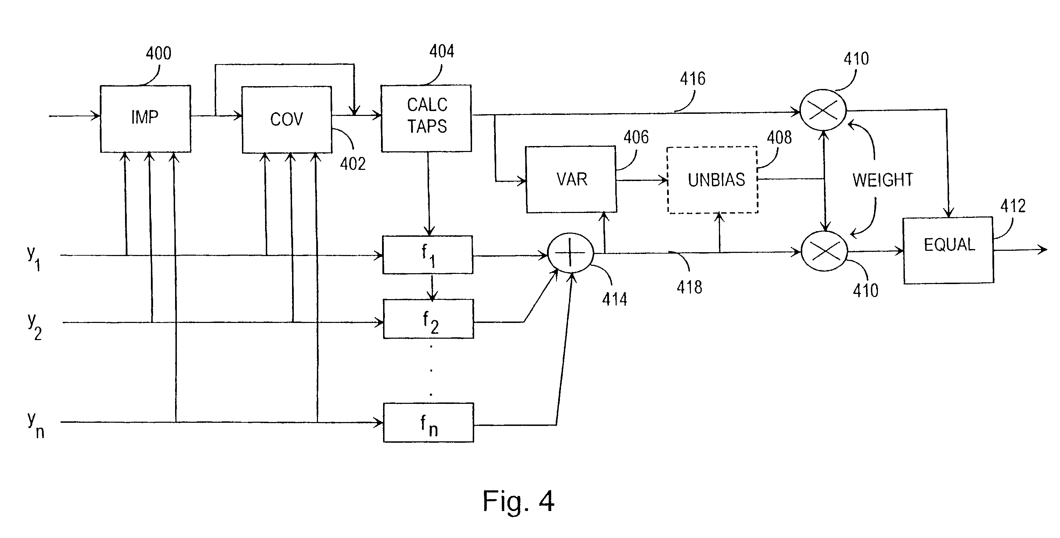

In block 202, an impulse response is calculated. Figure 3 illustrates a measured impulse response by way of example. In a typical cellular radio environment, the signals between a base transceiver station and a subscriber terminal propagate taking several different routes between a transmitter and a receiver. This multipath propagation is mainly caused by a signal being reflected from surrounding surfaces. Signals propagated via different routes arrive at the receiver at different times due to a different propagation delay. This applies to both transmission directions. This multipath propagation of a transmitted signal can be monitored at the receiver by measuring the impulse response of a received signal, in which the signals that have different times of arrival are shown as peaks proportional to their signal strength. Figure 3 illustrates the measured impulse response by way of example. The horizontal axis 300 designates time and the vertical axis 302 designates the strength of the received signal. Peak points 304, 306, 308 of the curve indicate the strongest components of the received signal.

Next, in block 204, a covariance matrix of the signal is estimated, the diagonal thereof providing a noise variance in a vector form, according to Formula 7. In block 206, tap coefficients of prefilters and a channel equalizer are calculated using a known method. In block 208, the noise variance is estimated again, according to Formula 10. Finally, in block 210, the signals supplied to the channel equalizer are weighted by weighting coefficients obtained by the noise estimation. Arrow 212 describes the repeatability of the method according to the requirements of the system standard being used, e.g. time slot specifically. In block 214, the level of possible biasing in the estimate is assessed in order to determine parameters according to Formula 11. This step is not necessary but will improve the performance if the tap coefficients of the prefilters have been determined using an equalizer algorithm which causes biasing to the noise energy estimate. The process ends in block 216.

Next, each method step will be described in closer detail by means of a simplified receiver structure necessary for determining the channel equalizer parameters, the structure being shown in Figure 4. For illustrative reasons, the figure only shows receiver structure parts relevant to the description of the invention.

Estimation block 400 receives the sampled signal as input, and the impulse response of each branch is estimated according to the prior art by cross-correlating received samples with a known sequence. A method for estimating impulse responses applicable to the known systems, which is applied e.g. to the GSM system, utilizes a known training sequence attached to a burst. 16 bits of the 26-bit-long training sequence are then used for estimating each impulse response tap. The structure usually also comprises a matched filter to reconstruct a signal distorted in the channel to the original data stream at a symbol error likelihood which depends on interference factors, such as intersymbol interference ISI. The autocorrelation taps of the estimated impulse response are calculated at the matched filter. The facilities described above can be implemented in many ways, e.g. by software run in a processor or by a hardware configuration, such as a logic built using separate components or ASIC (Application Specific Integrated Circuit).

After estimating the impulse response, the noise covariance matrix is calculated in block 402. According to the prior art, the covariance matrix can be estimated e.g. as follows:

In a linear case, a sampled signal vector can be shown in the form (variables in bold characters being vectors or matrixes)

$$\mathbf{y}_1 = \mathbf{H}_1 \mathbf{x} + \mathbf{w}_1,$$

$$\mathbf{y}_2 = \mathbf{H}_2 \mathbf{x} + \mathbf{w}_2 \tag{3}$$

wherein
$\mathbf{y}_1$ and $\mathbf{y}_2$ are sample vectors of the form

$$\left[ y[n] y[n+1] \ldots y[N-1] \right]^T,$$

when $n = 0, 1, \ldots, N\text{-}1$, wherein n is the number of samples and T is a transpose ,
$\mathbf{x}$ is the vector to be estimated,
$\mathbf{w}_1$ and $\mathbf{w}_2$ are noise vectors of the form

$$\left[ w[n] w[n+1] \ldots w[N-1] \right]^T,$$

$\mathbf{H}$ is a known observation matrix whose dimensions are $N \times (N + h_l\text{-}1)$, wherein $h_l$ is the length of the impulse response and wherein $h()$ are impulse response observation values, and which is of the form

$$
\mathbf{H} = \begin{bmatrix} h(0) & h(1) & \dots & h(h_l) & 0 & 0 & \dots & 0 \\ 0 & h(0) & h(1) & \dots & h(h_l) & 0 & \dots & 0 \\ \vdots & & & & & & & \\ 0 & 0 & \dots & 0 & h(0) & h(1) & \dots & h(h_l) \end{bmatrix},
$$

i.e. matrix **H** comprises an upper triangle matrix and a lower triangle matrix whose value is 0. Matrix multiplication **Hx** calculates the impulse response and information convolution.

Thus, the covariance of the two samples $\mathbf{y}_1$ and $\mathbf{y}_2$ is

$$
\begin{aligned}
\mu_{12} &= E\left[\left(\mathbf{y}_1 - E(\mathbf{y}_1)\right)\left(\mathbf{y}_2 - E(\mathbf{y}_2)\right)*\right] \\
&= \int_{-\infty}^{\infty}\int_{-\infty}^{\infty} \left(\mathbf{y}_1 - E(\mathbf{y}_1)\right)\left(\mathbf{y}_2 - E(\mathbf{y}_2)\right)* p\left(\mathbf{y}_1, \mathbf{y}_2\right) d\mathbf{y}_1 d\mathbf{y}_2 \\
&= \int_{-\infty}^{\infty}\int_{-\infty}^{\infty} \mathbf{y}_1\mathbf{y}_2 p\left(\mathbf{y}_1, \mathbf{y}_2\right) d\mathbf{y}_1 d\mathbf{y}_2 - E(\mathbf{y}_1)E(\mathbf{y}_2) \qquad (4) \\
&= E\left(\mathbf{y}_1\mathbf{y}_2\right) - E(\mathbf{y}_1)E(\mathbf{y}_2)
\end{aligned}
$$

wherein $E(\mathbf{y}_1)$ is the expected value of $\mathbf{y}_1$ and of the form

$$
E(\mathbf{y}_1) = \int_{-\infty}^{\infty} \mathbf{y}_1 p\left(\mathbf{y}_1\right) d\mathbf{y}_1. \qquad (5)
$$

In Formulas (5) and (6), p designates a probability density function and * designates a complex conjugate.
$E(\mathbf{y}_2)$ is obtained in a similar manner.
The covariance can be expressed in a matrix form also in the following manner:

$$
\mathbf{C} = E\left(\mathbf{e}_i\mathbf{e}_i^{H}\right), \qquad (6)
$$

wherein
H designates a complex conjugate transpose of the matrix

$$
\mathbf{e}_i = \begin{pmatrix} \mathbf{w}_{i1}^T \\ \mathbf{w}_{i2}^T \end{pmatrix} = \begin{pmatrix} \left(\mathbf{y}_{i1} - \mathbf{H}_{i1}\mathbf{x}\right)^T \\ \left(\mathbf{y}_{i2} - \mathbf{H}_{i2}\mathbf{x}\right)^T \end{pmatrix}, \qquad (7)
$$

wherein T designates a transpose of the matrix.
According to Figure 4, there may be more sample vectors than $\mathbf{y}_1$ and $\mathbf{y}_2$ shown in the formulas for the sake of simplicity. The elements of the diagonal of the covariance matrix form the signal noise variance in the vector form.

The facilities described above can be implemented in many ways, e.g. by software run in a processor or by a hardware configuration, such as a logic built using separate components or ASIC.

In block 404, the tap coefficients of prefilters $f_1$, $f_2$, etc. $f_n$ and the channel equalizer 412 are calculated. The output signals of blocks 400 and 402 serve as input signals of the block. The estimated impulse response values and the noise covariance matrix can be used for determining the tap coefficients of the prefilters. The prefilters may be either of FIR (Finite Impulse Response) or IIR (Infinite Impulse Response) type but not, however, matched filters. IIR filters require less parameters and less memory and calculation capacity than FIR filters that have an equally flat stop band, but the IIR filters cause phase distortion. As far as the application of the invention is concerned, it is irrelevant which filter or method of design is selected, so these will not be discussed in greater detail in the present description. Different methods for designing filters are widely known in the field. An output signal 416 of block 404, which is supplied to weighting means 410, is a modified impulse response.

Several channel equalizers of different type are generally known in the field. In practice, the most common ones include a linear equalizer, DEF (Decision Feedback Equalizer), which is non-linear, and the Viterbi algorithm, which is based on an ML (Maximum Likelihood) receiver. In connection with the Viterbi algorithm, the equalizer optimization criterion is the sequence error likelihood. Conventionally, the equalizer is implemented by means of a linear filter of the FIR type. Such an equalizer can be optimized by applying different criteria. The error likelihood depends non-linearly on the equalizer coefficients, so in practice, the most common optimization criterion is an MSE (Mean-Square Error), i.e. error power

$$J_{\min} = E\left|I_k - \hat{I}_k\right|^2 , \tag{8}$$

wherein

$J_{\min}$ is the error power minimum,
$I_k$ is a reference signal, and
$\hat{I}_k$ is the reference signal estimate, and
E is the expected value.

As far as the application of the invention is concerned, it is irrelevant which equalizer or method of optimization is selected, so these will not be discussed in closer detail in the present description. Different methods for optimizing equalizers are widely known in the field.

In block 406, the signal noise variance is calculated again after prefiltering. According to the prior art, the noise variance can be estimated e.g. as follows:

After prefiltering, the signal vector can be expressed in the form

$$y_c = H_c x + w_c, \tag{9}$$

wherein

$\mathbf{y}_c$ is a sample vector of the form

$$\left[ y[n]\, y[n+1] \ldots y[N-1] \right]^T ,$$

when

$n = 0,1,...,N$-1, wherein n is the number of samples and T is a transpose,
$\mathbf{x}$ is the vector to be estimated,
$\mathbf{w}_c$ is a noise vector of the form

$$\left[ w[n]\, w[n+1] \ldots w[N-1] \right]^T ,$$

$\mathbf{H}_c$ is a known observation matrix whose dimensions are $N\times(N+h_l-1)$, wherein $h_c()$ are impulse response observation values and $h_l$ is the length of the impulse response, and which is of the form

$$\mathbf{H}_c = \begin{bmatrix} h_c(0) & h_c(1) & \dots & h_c(h_l) & 0 & 0 & \dots & 0 \\ 0 & h_c(0) & h_c(1) & \dots & h_c(h_l) & 0 & \dots & 0 \\ \vdots & & & & & & & \\ 0 & 0 & \dots & 0 & h_c(0) & h_c(1) & \dots & h_c(h_l) \end{bmatrix}.$$

Thus, noise energy **N** can be estimated by using the formula

$$N = c * w_c^t w_c * /length(w_c), \qquad (10)$$

wherein
   c is a constant selected by the user, which is not necessary but which can, if necessary, be used for e.g. scaling the system dynamics,
   length is the length of the vector,
   t is the transpose of the vector,
   * is a complex conjugate, and
   / is division.

The functionalities described above can be implemented in many ways, e.g. by software run in a processor or by a hardware configuration, such as a logic built using separate components or ASIC.

If the tap coefficients of the prefilters have been determined by using an equalizer algorithm which causes biasing to the noise energy estimate, such as an MMSE-DFE (Minimum Mean-Square Equalizer - Decision Feedback Equalizer) equalizer algorithm, the estimate is unbiased in order to improve the channel encoding performance. In block 408, the weighting coefficients for unbiasing are calculated from the noise energy estimate as follows:

$$\mathbf{N} = \frac{\mathbf{N} * E\left(\left|\mathbf{y}_c\right|^2\right)}{\left(E\left(\left|\mathbf{y}_c\right|^2\right) + \mathbf{N}\right)}, \text{ wherein} \qquad (11)$$

**N** is the noise energy estimate and of the form shown in Formula 10, and

$$E\left(\left|\mathbf{y}_c\right|^2\right)$$

is the expected value of the signal energy after prefiltering. This is a solution in accordance with Figure 4.

In formula 10 for calculating noise energy **N**

$$\mathbf{N} = c * \mathbf{w}_c^t \mathbf{w}_c * /length\left(\mathbf{w}_c\right),$$

constant c can be determined using Formula 11, already taking the unbiasing of the noise energy estimate into account when calculating the weighting coefficients. After estimating the noise energy and assessing the effect of potential biasing, the output signal, i.e. the modified impulse response 416, of block 404 and a sum signal 418 formed in an adder 414 of the prefiltered sample signals are multiplied by the obtained weighting coefficients using the weighting means 410 before the actual channel equalizer block 412. This gives more reliable symbol error rate values for channel decoding.

The functionalities described above can be implemented in many ways, e.g. by software run in a processor or by a hardware configuration, such as a logic built using separate components or ASIC.

Although the invention has been described above with reference to the example of the accompanying drawings, it is obvious that the invention is not restricted thereto but can be modified in many ways within the inventive idea disclosed in the attached claims.

## Claims

1. A method for carrying out channel equalization in a radio receiver wherein an impulse response is estimated, noise power is determined by estimating a covariance matrix of the noise contained in a received signal before prefiltering, tap coefficients of prefilters and an equalizer are calculated, **characterized by**
   determining the noise power after prefiltering by estimating a noise variance, and
   weighting both the output signal from the prefilter (418) and the tap coefficients (416) which are to be inputted to the channel equalizer using weighting coefficients obtained by estimating the noise variance.

2. A method as claimed in claim 1, **characterized by** the signals to be weighted being the impulse response corrected by means of a noise covariance matrix estimate and the received prefiltered signals.

3. A method as claimed in any one of the preceding claims, **characterized by** weighting the signals (416, 418) supplied to the channel equalizer by weighting coefficients that are determined taking the biasing in the noise power estimate into account.

4. A method as claimed in any one of the preceding claims, **characterized by** carrying out channel equalization using a channel equalizer based on the Viterbi algorithm.

5. A method as claimed in any one of the preceding claims, **characterized by** carrying out channel equalization using a decision feedback channel equalizer.

6. A radio receiver comprising means (400) for estimating an impulse response, means (402) for determining noise power of a received signal by estimating a covariance matrix of the noise contained in the received signal before prefiltering, means (404) for calculating tap coefficients of prefilters and a channel equalizer, **characterized in that**
   the receiver comprises means (406) for determining the noise power after prefiltering by estimating a noise variance, and
   the receiver comprises means (410) for weighting both the output signal from the prefilter (418) and the tap coefficients (416) which are to be inputted to the channel equalizer using weighting coefficients obtained from the noise variance estimation.

7. A radio receiver as claimed in claim 6, **characterized in that** the signals to be weighted are the impulse response corrected by means of a noise covariance matrix estimate and the received prefiltered signals.

8. A radio receiver as claimed in any one of the preceding claims, **characterized in that** the receiver comprises means (410) for weighting the signals (416, 418) supplied to the channel equalizer by weighting coefficients that are determined taking the biasing in the noise power estimate into account.

9. A radio receiver as claimed in any one of the preceding claims, **characterized in that** the receiver comprises means (412) for carrying out channel equalization by a channel equalizer based on the Viterbi algorithm.

10. A radio receiver as claimed in a any one of the preceding claims, **characterized in that** the receiver comprises means (412) for carrying out channel equalization using a decision feedback channel equalizer.

## Patentansprüche

1. Verfahren zum Ausführen einer Kanalentzerrung in einer Funkempfangsvorrichtung, wobei eine Impulsantwort geschätzt wird, eine Rauschleistung durch Schätzen einer Kovarianzmatrix des in einem empfangenen Signal beinhalteten Rauschens vor einer Vorfilterung bestimmt wird, Anzapfungskoeffizienten von Vorfiltern und einer Entzerrungseinrichtung berechnet werden, **gekennzeichnet durch** Schritte

zum Bestimmen der Rauschleistung nach einer Vorfilterung **durch** Schätzen einer Rauschvarianz und zum Gewichten sowohl des Ausgangssignals von dem Vorfilter (418) als auch der Anzapfungskoeffizienten (416), die der Kanalentzerrungseinrichtung zuzuführen sind, unter Verwendung von **durch** Schätzen der Rauschvarianz erhaltenen Gewichtungskoeffizienten.

2. Verfahren nach Anspruch 1, **dadurch gekennzeichnet, dass** die zu gewichtenden Signale die Impulsantwort sind, die mittels einer Rauschkovarianzmatrixschätzung und der empfangenen vorgefilterten Signale korrigiert wird.

3. Verfahren nach einem der vorangegangenen Ansprüche, **gekennzeichnet durch** einen Schritt zum Gewichten der Signale (416, 418), die der Kanalentzerrungseinrichtung zugeführt werden, **durch** Gewichtungskoeffizienten, die unter Berücksichtigung der Beeinflussung in der Rauschleistungsschätzung bestimmt werden.

4. Verfahren nach einem der vorangegangenen Ansprüche, **gekennzeichnet durch** einen Schritt zum Ausführen einer Kanalentzerrung unter Verwendung einer Kanalentzerrungseinrichtung, die auf dem Viterbi-Algorithmus beruht.

5. Verfahren nach einem der vorangegangenen Ansprüche, **gekennzeichnet durch** einen Schritt zum Ausführen einer Kanalentzerrung unter Verwendung einer Entscheidungsrückkopplungs-Kanalentzerrungseinrichtung.

6. Funkempfangsvorrichtung mit Einrichtungen (400) zum Schätzen einer Impulsantwort, Einrichtungen (402) zum Bestimmen einer Rauschleistung eines empfangenen Signals durch Schätzen einer Kovarianzmatrix des Rauschens, das in dem empfangenen Signal beinhaltet ist, vor einer Vorfilterung, Einrichtungen (404) zur Berechnung von Anzapfungskoeffizienten von Vorfiltern und einer Kanalentzerrungseinrichtung, **dadurch gekennzeichnet, dass**

   die Empfangsvorrichtung Einrichtungen (406) zur Bestimmung der Rauschleistung nach einer Vorfilterung durch Schätzen einer Rauschvarianz umfasst und

   die Empfangsvorrichtung Einrichtungen (410) zum Gewichten sowohl des Ausgangssignals von dem Vorfilter (418) als auch der Anzapfungskoeffizienten (416), die der Kanalentzerrungseinrichtung zuzuführen sind, unter Verwendung von von der Rauschvarianzschätzung erhaltenen Gewichtungskoeffizienten umfasst.

7. Funkempfangsvorrichtung nach Anspruch 6, **dadurch gekennzeichnet, dass** die zu gewichtenden Signale die Impulsantwort sind, die mittels einer Rauschkovarianzmatrixschätzung und der empfangenen vorgefilterten Signale korrigiert wird.

8. Funkempfangsvorrichtung nach einem der vorangegangenen Ansprüche, **dadurch gekennzeichnet, dass** die Empfangsvorrichtung Einrichtungen (410) zum Gewichten der Signale (416, 418) umfasst, die der Kanalentzerrungseinrichtung zugeführt werden, durch Gewichtungskoeffizienten, die unter Berücksichtigung der Beeinflussung in der Rauschleistungsabschätzung bestimmt werden.

9. Funkempfangsvorrichtung nach einem der vorangegangenen Ansprüche, **dadurch gekennzeichnet, dass** die Empfangsvorrichtung Einrichtungen (412) zur Ausführung einer Kanalentzerrung durch eine Kanalentzerrungseinrichtung umfasst, die auf dem Viterbi-Algorithmus beruht.

10. Funkempfangsvorrichtung nach einem der vorangegangenen Ansprüche, **dadurch gekennzeichnet, dass** die Empfangsvorrichtung Einrichtungen (412) zur Ausführung einer Kanalentzerrung unter Verwendung einer Entscheidungsrückkopplungskanalentzerrungseinrichtung umfasst.

**Revendications**

1. Procédé pour effectuer une égalisation de canal dans un récepteur radio dans lequel une réponse impulsionnelle est estimée, une puissance de bruit est déterminée en estimant une matrice de covariance du bruit contenu dans un signal reçu avant un pré-filtrage, des coefficients de prise de pré-filtres et d'un égaliseur sont calculés, **caractérisé par**

   la détermination de la puissance de bruit après un pré-filtrage en estimant une variance de bruit, et

   la pondération à la fois du signal de sortie du pré-filtre (418) et des coefficients de prise (416) qui doivent être appliqués à l'égaliseur de canal en utilisant des coefficients de pondération obtenus en estimant la variance de bruit.

**EP 1 183 840 B1**

**2.** Procédé selon la revendication 1, **caractérisé en ce que** les signaux devant être pondérés sont la réponse impulsionnelle corrigée au moyen d'une estimation de matrice de covariance de bruit et des signaux pré-filtrés reçus.

**3.** Procédé selon l'une quelconque des revendications précédentes, **caractérisé par** la pondération des signaux (416, 418) appliqués à l'égaliseur de canal par des coefficients de pondération qui sont déterminés en prenant en compte la polarisation dans l'estimation de puissance de bruit.

**4.** Procédé selon l'une quelconque des revendications précédentes, **caractérisé par** l'exécution d'une égalisation de canal en utilisant un égaliseur de canal basé sur l'algorithme de Viterbi.

**5.** Procédé selon l'une quelconque des revendications précédentes, **caractérisé par** l'exécution d'une égalisation de canal en utilisant un égaliseur de canal à correction automatique d'erreur.

**6.** Récepteur radio comprenant des moyens (400) pour estimer une réponse impulsionnelle, des moyens (402) pour déterminer la puissance de bruit d'un signal reçu en estimant une matrice de covariance du bruit contenu dans le signal reçu avant un pré-filtrage, des moyens (404) pour calculer des coefficients de prise de pré-filtres et d'un égaliseur de canal, **caractérisé en ce que**

le récepteur comprend des moyens (406) pour déterminer la puissance de bruit après un pré-filtrage en estimant une variance de bruit, et

le récepteur comprend des moyens (410) pour pondérer à la fois le signal de sortie du pré-filtre (418) et les coefficients de prise (416) qui doivent être appliqués à l'égaliseur de canal en utilisant des coefficients de pondération obtenus par l'estimation de variance de bruit.

**7.** Récepteur radio selon la revendication 6, **caractérisé en ce que** les signaux devant être pondérés sont la réponse impulsionnelle corrigée au moyen d'une estimation de matrice de covariance de bruit et des signaux pré-filtrés reçus.

**8.** Récepteur radio selon l'une quelconque des revendications précédentes, **caractérisé en ce que** le récepteur comprend des moyens (410) pour pondérer les signaux (416, 418) appliqués à l'égaliseur de canal par des coefficients de pondération qui sont déterminés en prenant en compte la polarisation dans l'estimation de puissance de bruit.

**9.** Récepteur radio selon l'une quelconque des revendications précédentes, **caractérisé en ce que** le récepteur comprend des moyens (412) pour effectuer une égalisation de canal par un égaliseur de canal basé sur l'algorithme de Viterbi.

**10.** Récepteur radio selon l'une quelconque des revendications précédentes, **caractérisé en ce que** le récepteur comprend des moyens (412) pour effectuer l'égalisation de canal en utilisant un égaliseur de canal à correction automatique d'erreur.

Fig. 1

Fig. 3

START
200

ESTIMATING IMPULSE RESPONSE
202

CALCULATING COVARIANCE MATRIX
204

CALCULATING TAP COEFFICIENTS OF
FILTERS AND CHANNEL EQUALIZER
206

CALCULATING COVARIANCE MATRIX
208

DETERMINING BIASING LEVEL
214

MULTIPLYING BY WEIGHTING
COEFFICIENTS
210

212

END
216

Fig. 2

Fig. 4